# FASCICULE DE BREVET EUROPEEN

(11) **EP 4 514 657 B1**
(45) Date de publication et mention de la délivrance du brevet: **01.04.2026**
(21) Numéro de dépôt: 23720091.0
(22) Date de dépôt: 18.04.2023
(51) Int. Cl.: B60R 9/045, B60R 9/04

(54) **AGENCEMENT D'UNE CAISSE DE VÉHICULE COMPORTANT UN DISPOSITIF DE PORTAGE TRANSFORMABLE ET UN TOIT OUVRANT**
ANORDNUNG EINER FAHRZEUGKAROSSERIE MIT EINER UMWANDELBAREN TRAGVORRICHTUNG UND EINEM SONNENDACH
ARRANGEMENT OF A VEHICLE BODY COMPRISING A TRANSFORMABLE CARRYING DEVICE AND A SUNROOF

(30) Priorité: 27.04.2022 FR 2203935
(43) Date de publication de la demande: 05.03.2025
(73) Titulaire: Renault s.a.s, 92100 Boulogne Billancourt (FR)
(72) Inventeur: CONDE IGLESIAS, Manuel, 78280 GUYANCOURT (FR); CALMET, Samuel, 78280 GUYANCOURT (FR)
(86) Numéro de dépôt international: PCT/EP2023/059978
(87) Numéro de publication internationale: WO 2023/208645

(56) Documents cités:
- DE-A1- 102012 014 371
- DE-A1- 102018 100 889
- DE-U1- 202017 102 513
- DE-U1- 202018 106 922
- FR-A1- 2 460 808
- US-A1- 2010 264 179

## Description

### Domaine technique de l'invention

L'invention est du domaine des véhicules équipés d'un dispositif de portage et d'un toit ouvrant.

L'invention concerne un agencement d'une caisse de véhicule, notamment une automobile, comprenant un pavillon, un panneau mobile de toit ouvrant, un dispositif de portage comportant des barres porteuses et des interfaces de fixation, le dispositif de portage étant apte à prendre des configurations distinctes dites de rangement et de transport selon lesquelles la barres porteuses sont respectivement disposées en position longitudinale et en position transversale. Selon l'agencement de l'invention, le pavillon comportant une ouverture destinée à être fermée par le panneau mobile de toit ouvrant. L'invention concerne aussi un procédé de protection d'un panneau mobile de toit ouvrant d'un tel agencement mais aussi un véhicule comportant un tel agencement, voire ayant les moyens de mise en œuvre d'un tel procédé de protection. Elle concerne aussi un procédé de réalisation d'un tel agencement.

### Etat de la technique antérieure

Un agencement d'une caisse d'un véhicule correspondant au préambule de la revendication 1 est divulgué par DE 10 2012 014371 A1. Il est connu un dispositif de portage modulaire comportant des interfaces de fixation sur lesquelles des barres porteuses sont assemblées de manière démontable afin de passer d'une position longitudinale à une position transversale. Les interfaces de fixation sont conçues afin de rester à demeure sur la caisse et sont destinées à leur assemblage par paire aux barres porteuses, quelle que soit leur position longitudinale ou transversale. Les interfaces de fixation comprennent par paire des pieds avant et arrière, disposés aux extrémités droite et à gauche du toit. Dans la position longitudinale, chaque barre porteuse est en liaison mécanique avec des pieds avant et arrière, notamment par ses portions d'extrémité, tandis qu'en position transversale, chaque barre porteuse est en liaison mécanique avec une paire de pieds opposés droit et gauche. Les pieds sont montés de manière solidaire à la caisse du véhicule, au niveau du toit, et sont conformés pour recevoir une barre porteuse aussi bien de manière longitudinale que transversale. Un mécanisme de fixation permet le montage/démontage des barres, notamment par vissage, de sorte qu'il est rendu aisé le changement de configuration du dispositif de portage entre une première configuration dite de rangement, selon laquelle les barres porteuses s'étendent longitudinalement, et une seconde configuration dite de transport, selon laquelle les barres porteuses s'étendent transversalement.

Un tel dispositif de portage est avantageux en ce qu'il est conçu pour rester à demeure sur le toit du véhicule, de sorte qu'il contribue au style général du véhicule. Il doit alors répondre aux exigences de style mais aussi de sécurité. Pour des raisons d'aérodynamisme, de tenue de la structure de caisse aux efforts transversaux, mais aussi de réduction du bruit d'air, la hauteur des barres porteuses se doit d'être limitée.

Il est connu aussi que le toit peut comprendre une découpe délimitant une ouverture au travers de laquelle peut être logée une cloison mobile d'un dispositif de toit ouvrant. Parmi les cloisons mobiles, il est connu l'usage d'un panneau vitré relié à un dispositif de manœuvre qui peut comprendre un système de glissières le long duquel le toit est apte à se déplacer d'une position de fermeture à une position d'ouverture à recouvrement du toit par l'extérieur du véhicule. Une telle typologie de toit ouvrant rencontre la faveur des constructeurs notamment par le fait qu'avec une telle cinématique de toit ouvrant, il n'est nullement impacté le volume intérieur du véhicule, ce qui tend à favoriser l'habitabilité.

Il a été relevé que la conjugaison d'une telle typologie de toit ouvrant et du dispositif de portage modulaire susmentionné pouvait engendrer un risque de dysfonctionnement du toit ouvrant qui est principalement dû à l'appui du toit contre la barre porteuse dont la distance avec le toit est limitée. En configuration dite de transport, la barre porteuse avant s'étend de façon transversale au véhicule, et sensiblement verticale au droit du toit ouvrant alors en position de fermeture. Le panneau mobile de toit ouvrant peut être déplacé de sa position de fermeture vers sa position d'ouverture par la sollicitation du mécanisme de manœuvre qui lui fournit les efforts importants pour lui permettre notamment de se dégager des éléments d'étanchéité. Le mécanisme de manœuvre connu comprend bien souvent un motoréducteur piloté qui est relié électriquement à une unité électronique de commande. Du fait des efforts élevés appliqués au panneau vitré par le mécanisme de déplacement, la moindre interférence avec un obstacle, telle que la barre porteuse avant, pourrait s'avérer néfaste à l'intégrité physique du toit ouvrant, en créant une détérioration irréversible du panneau vitrée, comme des rayures ou une casse.

Une telle situation ne saurait être acceptable.

### Présentation de l'invention

L'invention vise à résoudre cet inconvénient et concerne un agencement d'une caisse d'un véhicule, notamment une automobile, comprenant un pavillon, un panneau mobile de toit ouvrant, un dispositif de portage comportant des barres porteuses et des interfaces de fixation, le dispositif de portage étant apte à prendre des configurations distinctes dites de rangement et de transport selon lesquelles la barres porteuses sont respectivement disposées en position longitudinale et en position transversale, le pavillon comportant une ouverture destinée à être fermée par un panneau mobile de toit ouvrant. L'agencement est remarquable en ce qu'il comprend un dispositif de protection du toit ouvrant comportant au moins un élément de butée et une unité électronique de commande du déplacement du panneau mobile, le dispositif de protection étant destiné à inverser le sens de déplacement du panneau mobile de toit ouvrant lorsque le panneau mobile est amené en appui contre l'élément de butée.

Le dispositif de protection comprend l'unité électronique de commande qui est destinée au pilotage du déplacement du panneau mobile vers les positions d'ouverture, de fermeture et intermédiaires, et qui comprend un programme d'ordinateur qui est destiné à inverser le sens de déplacement du panneau de toit ouvrant lorsque le panneau mobile vient en appui contre l'au moins l'une des barres porteuses par analyse de l'évolution du signal de commande sortant de l'unité électronique de commande qui est en relation électrique avec un moto-réducteur couplé à un dispositif de guidage du panneau mobile le long de la caisse. L'agencement objet de l'invention peut en outre comprendre les caractéristiques suivantes prises séparément ou en combinaison entre elles :
- l'élément de butée est assemblé audit dispositif de portage, notamment au niveau d'au moins une barre porteuse,
- le dispositif de protection est en relation électrique avec un moyen d'entrainement du toit ouvrant, notamment un moto-réducteur,
- l'élément de butée est une cale, notamment réalisée en polypropylène, s'étendant en saillie verticale hors d'une paroi inférieure de la barre porteuse disposée au regard du pavillon et/ou du toit ouvrant, notamment au toit ouvrant en position de fermeture ou d'entrebâillement,
- il comprend un dispositif de guidage par lequel le toit ouvrant est apte à prendre successivement une position de fermeture d'une ouverture de pavillon, une position d'ouverture partielle de l'ouverture de pavillon, notamment selon une position d'entrebâillement du toit ouvrant, et d'une position extrême d'ouverture selon laquelle le toit ouvrant est disposé au-dessus du pavillon, notamment de manière sensiblement parallèle au pavillon,
- selon l'invention une interface de fixation comprenant un logement, notamment une échancrure ouverte vers l'extérieur, notamment disposée au niveau d'une face sommitale du pied, qui est de forme sensiblement complémentaire à celle de l'élément de butée, aux jeux de tolérances de fabrication près, de telle sorte qu'en position longitudinale de la barre porteuse, l'élément de butée est disposé à l'intérieur du logement de l'interface de fixation,
- l'interface de fixation comportant le logement est un pied arrière droit ou gauche,
- en configuration dite de rangement, l'élément de butée est rendu invisible.

La divulgation a aussi trait à un procédé de protection d'un panneau mobile d'un agencement ayant les caractéristiques susmentionnées, au moins un élément de butée s'étendant en saillie verticale hors d'une face inférieure de la barre porteuse, de telle sorte qu'en position transversale de la barre porteuse, l'élément de butée est disposé au travers d'un chemin de déplacement du panneau mobile de toit ouvrant. Le procédé comprend une étape de déplacement du panneau de toit ouvrant vers la position d'ouverture s'opérant jusqu'à une mise en appui d'un panneau de toit ouvrant contre l'élément de butée, créant de la sorte une évolution d'un signal de commande émis par une unité électronique de commande du dispositif de protection du toit ouvrant, suivi d'une étape de fermeture réalisée par l'unité électronique de commande selon une inversion du sens de fonctionnement du moto-réducteur afin d'amener le panneau mobile de toit ouvrant en position de fermeture.

L'invention concerne aussi un véhicule, notamment du type d'une automobile, comprenant l'agencement susmentionné.

Enfin sans sortir du cadre de l'invention, cette dernière concerne aussi un procédé de réalisation de l'agencement précédemment décrit, comportant une étape de fabrication d'une barre porteuse, notamment par extrusion d'un métaux ferreux, tel qu'un alliage d'aluminium par exemple, suivie :
- soit d'une étape de fabrication d'un élément de butée, notamment par moulage d'une matière plastique, et d'une étape d'assemblage de l'élément de butée sur la barre porteuse, notamment par vissage,
- soit d'une étape de fabrication d'un élément de butée directement au niveau de la barre porteuse selon une opération de surmoulage d'une matière plastique.

Selon le procédé de réalisation de l'invention, l'élément de butée peut être réalisé en matière plastique non déformable, notamment un polypropylène ayant une dureté comprise entre 50 et 70 Shore D, préférentiellement 63 Shore D.

### Présentation des figures

Les dessins annexés représentent, à titre d'exemple, un mode de réalisation de l'agencement selon l'invention.
La [Fig.1] représente en perspective partielle d'un véhicule automobile vu de dessus avec un dispositif de portage en première configuration dite de rangement des barres porteuses longitudinalement au véhicule selon un mode de réalisation de l'invention.
La [Fig.2] est une vue schématique du véhicule de la [Fig.1] avec le dispositif de portage dans une seconde configuration dite de transport, selon l'invention.
La [Fig.3] est une représentation schématique en coupe d'un pied arrière de fixation d'un barre avec un élément de butée, selon l'invention.
La [Fig.4] est une représentation schématique du pied de la [Fig.3] selon une coupe A-A, selon l'invention.

### Description détaillée

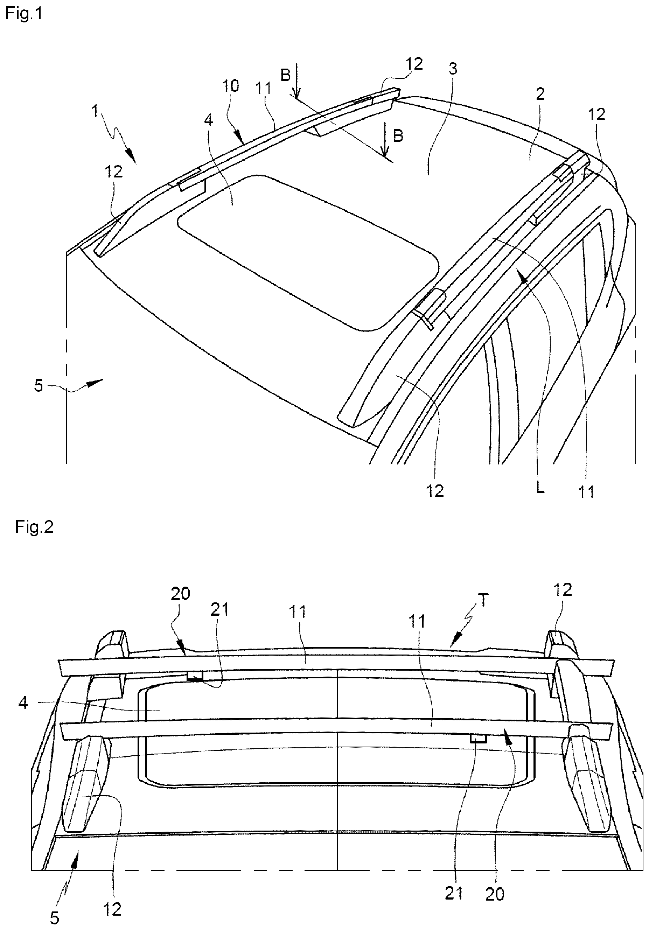

Sur la [Fig.1] est représenté un véhicule par le dessus et de trois quart avant. Le pare-brise avant 5 est prolongé par l'arrière via un pavillon 3 équipé d'un toit ouvrant 4. Le pavillon 3 comprend un dispositif de portage 10 qui se compose de barres porteuses 11 disposées respectivement de chaque côté droit en gauche du pavillon. Chaque barre porteuse 11 est reliée à la caisse 2 du véhicule sur laquelle est soudée le pavillon, par l'intermédiaire d'interfaces de fixation 12. Les interfaces de fixation sont parfois qualifiées de pieds, notamment de pieds d'attache qui sont solidarisé à la caisse, ici de manière pérenne.

Le dispositif de portage 10 est de conception telle qu'il destiné à rester ainsi assemblé au véhicule. Quand bien même il pourrait être envisagé son démontage pour des raisons de réparation par exemple, le dispositif de portage ne rentre pas dans la catégorie des accessoires pouvant être monté et démonté rapidement de la caisse. Pour cela, les interfaces de fixation 12 peuvent être assemblées par l'intérieur de l'habitacle, soit depuis le côté intérieur du pavillon. Les interfaces de fixation présentent un profil élancé qui tend à suivre le profil évolutif du véhicule tout en maintenant les barres porteuses qui viennent à recouvrement par le dessus, à une distance limitée du pavillon 3, comprise entre 10 et 40 mm, préférentiellement d'environ 30 mm du pavillon 3.

Chaque barre porteuse 11 est un profil préférentiellement réalisé en aluminium par extrusion. Le profil longitudinal de la barre porteuse 11 suit le galbe longitudinal du pavillon 3, ce qui donne une harmonie de style à laquelle l'utilisation est sensible. Une telle conception permet en outre de contenir les effets de bruit liés au déplacement du véhicule.

Les interfaces de fixation 12 se composent donc de pieds avant et de pied arrière, répartis au niveau de chacun des bords latéraux du pavillon. Le pied avant gauche est relié au pied arrière gauche par la barre porteuse qui s'étend au prolongement des pieds afin de créer une continuité de ligne d'avant vers l'arrière du véhicule lorsque le dispositif de portage est dans la configuration de rangement des barres porteuses, selon l'illustration de la [Fig.1]. Selon cette configuration, les barres porteuses sont en position longitudinale L.

Le toit ouvrant 4 en position fermée est approximativement disposé pour partie entre les pieds avant gauche et droit, tout du moins au niveau d'une portion arrière de chacun des pieds avant.

Sur la [Fig.2], le dispositif de portage 10 est en configuration de transport de telle sorte que les barres porteuses 11 s'étendent de manière sensiblement transversale au véhicule, en ce sens qu'elles visent chacune à relier un pied droit à un pied gauche à l'avant et à l'arrière du véhicule. Les barres porteuses sont ainsi en position transversale T.

Chaque barre porteuse 11 comprend un élément de butée 21 qui sera détaillé plus en détail par la suite. Un tel élément de butée appartient à un dispositif de protection 20 du toit ouvrant qui vise à éviter son ouverture lorsqu'une barre porteuse 12 est positionnée de manière transversale à l'avant du pavillon, alors fixée aux deux pieds avant 11.

La butée 21 s'étend en saillie hors d'une face de la barre porteuse 12. Pour des raisons d'intégration à l'intérieur des pieds lorsque les barres porteuses sont en position longitudinale, comme cela sera détaillée par la suite, chaque butée est décalée par rapport au centre de la barre porteuse. La barre porteuse avant comprend une butée 21 placée à droite du plan médian au véhicule. La barre porteuse arrière comprend une butée 21 placée à gauche du plan médian au véhicule.

Le véhicule comprend ainsi un dispositif de protection 20 du toit ouvrant comportant au moins un élément de butée 21

dont la particularité fonctionnelle est de provoquer un point dur lorsque le panneau mobile du toit ouvrant 4 vient en contact avec celle-ci, ce qui a pour effet de créer, par l'intermédiaire d'un dispositif de protection 20 comportant une unité électronique de commande, une inversion du sens de déplacement du toit ouvrant.

La hauteur de la butée est définie selon un appui de la butée 21 contre le panneau de toit s'il venait à ce que ce dernier soit déplacé vers une position d'ouverture. En venant ainsi en contact contre la butée durant son mouvement de déplacement vers une position d'ouverture, le panneau mobile du toit ouvrant 4 est rappelé vers sa position de fermeture par le dispositif de protection 20 qui est en relation électrique avec un moteur d'entraînement du toit ouvrant 4. Le dispositif de protection 20 comprend une unité électronique de commande qui est destinée à assurer la sécurité de fonctionnement du toit ouvrant dans son déplacement. A titre d'exemple, une telle unité électronique de commande délivre un signal de commande d'un motoréducteur qui est relié à un mécanisme de manœuvre du panneau du toit ouvrant 4. Ainsi l'évolution de l'intensité du courant fournit par l'unité électronique de commande au moto-réducteur est scrutée par l'unité électronique de commande de sorte qu'en cas de dépassement d'un seuil prédéfini, le sens d'ouverture du panneau de toit ouvrant est commandé, provoquant de la sorte une fermeture. L'élément de butée 21 est une cale, pouvant être réalisée en polypropylène, s'étendant en saillie verticale hors d'une paroi inférieure de la barre porteuse 11. En position transversale de la barre porteuse avant, la cale formant l'élément de butée 21 est positionnée au travers du chemin de déplacement du toit ouvrant. Ainsi lorsque le panneau de toit ouvrant 4 est déplacé de sa position de fermeture vers sa position d'ouverture, il occupe préalablement une position d'entrebâillement qui consiste en une inclinaison de la partie arrière du panneau de toit. Cela permet de dégager le panneau de toit des éléments d'étanchéité périphérique monté sur l'ouverture ménagée sur le pavillon 3 et/ou le contour du panneau de toit ouvrant 4. Lorsque le panneau de toit ouvrant est amené en position entrebâillée, il vient en appui contre la butée 21 selon une direction sensiblement verticale. Dès lors, l'unité électronique de commande fournit un signal de commande dont l'intensité tend à augmenter brusquement du fait de cette immobilisation temporaire du panneau de toit ouvrant. Le seuil, notamment d'intensité, du signal de sortie de l'unité électronique de commande est alors dépassé, ce qui est traduit par la présence d'un obstacle. Le programme de l'unité électronique de commande exécute une étape de fermeture du panneau de toit vers sa position de fermeture, soit un inversement du sens de fonctionnement du moto-réducteur.

En l'absence de barre porteuse 11 avant positionnée de manière transversale, le panneau de toit ouvrant est relié à la caisse 2 du véhicule par un dispositif de manœuvre qui comprend des rails latéraux de guidage sur lesquels des chariots sont aptes à coulisser afin d'amener successivement le panneau de toit ouvrant 4 d'une position de fermeture d'une ouverture de pavillon 3, à une position d'ouverture partielle de l'ouverture de pavillon, notamment une position d'entrebâillement du toit ouvrant, puis à une position extrême d'ouverture dans laquelle le panneau de toit ouvrant est disposé au-dessus du pavillon 3, notamment de manière sensiblement parallèle au pavillon.

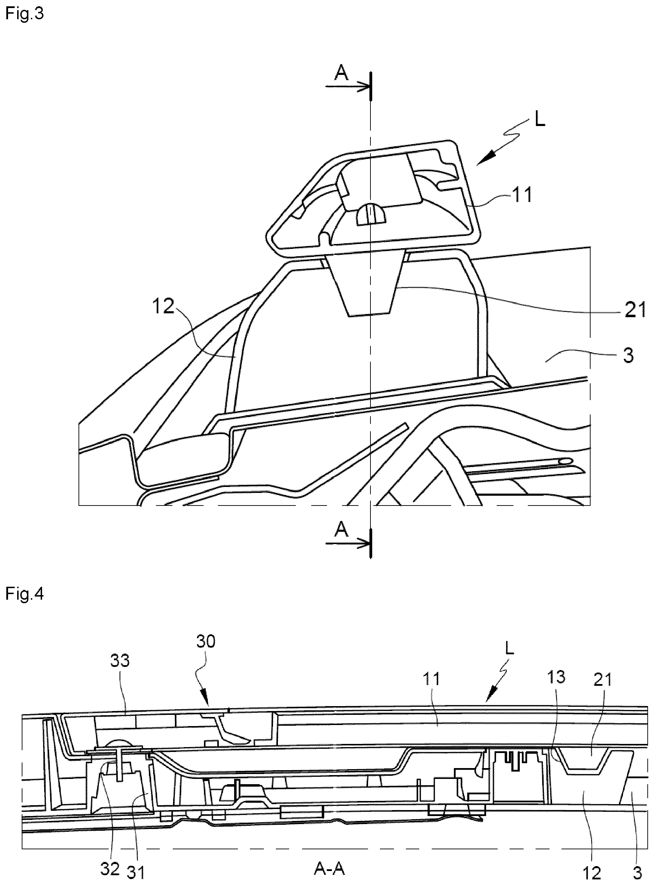

L'interface de fixation 12 située au niveau du côté droit et arrière du pavillon 3 est représenté sur la [Fig.3]. L'interface de fixation est ici représenté selon une coupe transversale d'axe B-B de la [Fig.1]. Cette représentation permet de mettre en évidence la position relative de l'élément de butée 21 par rapport au pied sur lequel la barre porteuse 11 est rapportée par le dessus. La partie sommitale du pied arrière ainsi représenté comprend un logement ouvert sur l'extérieur et au travers duquel l'élément de butée 21 est rapporté lorsque la barre porteuse 11 est positionnée de manière longitudinale. Dans cette configuration, l'élément de butée 21 est rendu invisible comme le montre la [Fig.1]. La distance entre l'extrémité libre de la barre porteuse et le positionnement de l'élément de butée 21 sur cette même barre est définie selon la géométrie des interfaces de fixation de telle sorte que l'élément de butée vienne à placement à l'intérieur de l'interface de fixation 12.

Les extrémités libres de chaque barre porteuse 12 comprend un moyen de verrouillage 30 qui est préférentiellement du type d'un dispositif de serrage par vissage.

Selon une variante de réalisation, ledit moyen de verrouillage 30 comporte un dispositif de crochetage relié à un levier qui par un effet de basculement permet de bloquer la barre porteuse 11 au pied 12 en position longitudinale ou transversale de la barre porteuse.

L'interface de fixation 12 comprend une embase 31 qui est fixée à la caisse du véhicule et une pièce d'aspect recouvrant l'embase. La pièce d'aspect peut être obtenue par moulage d'une matière plastique. L'embase 31 peut être réalisée par moulage d'une matière plastique. L'embase 31 comprend des nervures de rigidification qui visent à augmenter la tenue mécanique de l'interface de fixation 12 ainsi que sa fixation à la caisse 2, notamment au pavillon 3. L'embase 31 peut être fixée à la caisse par l'intérieur, notamment par vissage, de sorte que lesdits moyens de fixation sont rendus invisibles. L'embase 31 est recouverte de la pièce d'aspect qui prend approximativement la forme d'une boîte creuse, rapportée de manière inversé de telle sorte que le fond de la boite délimite la partie sommitale de l'interface de fixation 12.

Sur la [Fig.1] et la [Fig.4], la pièce d'aspect présente une portion basse suivie d'une portion haute.

La barre porteuse est destinée à venir en appui contre la portion basse.

Les pieds avant comportent une section évolutive qui s'étend, selon une direction de l'avant à l'arrière du véhicule, du pavillon 3 jusqu'à une portion haute par une pente d'inclinaison. La portion haute est ainsi longitudinalement prolongée par une portion basse conformée selon la hauteur de la barre porteuse de telle manière que la barre porteuse en position longitudinale vient à affleurement de la portion haute du pied avant.

Les pieds arrière comportent d'avant vers l'arrière une portion basse prolongée d'une portion arrière reliées l'une à l'autre par une paroi de liaison d'orientation sensiblement verticale. L'extrémité arrière de la barre porteuse comprend une paroi de fermeture de la section creuse qui d'inclinaison sensiblement identique à celle du pied arrière de telle sorte qu'une fois la barre positionnée sur le pied arrière, le bord arrière de la barre porteuse est approximativement parallèle à la paroi de liaison du pied arrière. La barre porteuse placée en position longitudinale sur le véhicule vient à affleurement de la portion haute du pied arrière comme cela est visible sur le [Fig.4].

Le profil de l'élément de butée 21 peut être approximativement trapézoïdal selon une coupe transversale, comme cela est illustré sur la [Fig.3].

Le profil de l'élément de butée 21 peut être approximativement trapézoïdal selon une coupe longitudinale, comme cela est illustré sur la [Fig.4].

L'élément de butée 21 peut être fixé à la barre porteuse 11 de manière démontable, notamment par vissage. La barre porteuse peut ainsi comprendre une ouverture traversant ses cloisons supérieure et inférieure. La cloison supérieure peut comprendre un embouti destiné au placement à affleurement d'une tête de vis de fixation par rapport à la partie sommitale de la barre porteuse.

Le logement 13 de l'interface de fixation peut être de forme sensiblement complémentaire à l'élément de butée 21 ce qui tend à guider la barre porteuse dans sa position longitudinale sur l'interface de fixation 12, pour faciliter l'opération manuelle d'assemblage lorsque le dispositif de portage passe d'une configuration de transport à une configuration de rangement.

Les logements 13 sont de préférence ménagés respectivement au niveau des pieds arrière droit et gauche ce qui tend à favoriser le positionnement de chaque barre porteuse 11. Ils sont réalisés par moulage du boîtier formant la paroi extérieur de l'interface de fixation.

Chaque barre porteuse en position transversale peut être indifféremment positionnée à l'avant ou à l'arrière.

Quelle que soit le position longitudinale ou transversale des barres porteuses, elles sont assemblées aux interfaces de fixation, notamment à son embase 31, par un moyen de verrouillage 30. Il peut s'agir par exemple d'une vis de serrage 32 comme cela est visible à la [Fig.4]. Chaque extrémité de la barre porteuse 11 comprend un tel moyen de fixation, de telle manière que la paroi inférieure de la barre porteuse comprend une ouverture au travers de laquelle la vis de serrage 32 est positionnée. Le paroi supérieure de la barre porteuse peut comprendre une ouverture d'accès à la vis de serrage 32 qui peut être obturée par un couvercle 33, comme cela est visible à la [Fig.4].

De préférence, les barres porteuses sont fabriquées par extrusion d'un métaux ferreux, tel qu'un alliage d'aluminium. Selon un procédé de fabrication des barres porteuses, l'élément de butée 21 peut être fabriqué par moulage d'une matière plastique. Il peut s'agir d'une matière plastique qui peut être déformable. A titre d'exemple, la matière plastique présente une propriété de déformation du fait de sa dureté comprise entre 75 et 90 Shore A, préférentiellement 85 Shore A. Le recours à un tel matériau confère un coefficient de glissement qui tend à retenir le panneau mobile, ce qui se traduit par une évolution rapide de signal émis par l'unité électronique de commande.

Selon un autre mode de réalisation, l'élément de butée 21 est réalisé dans une matière non déformable, tel que du polypropylène, ayant par exemple une dureté d'approximativement 63 Shore D. Cela permet un glissement du panneau mobile contre l'élément de butée 21, qui donne également une image de l'appui du panneau mobile sur l'élément de butée qui est facilement détectée par l'unité électronique de commande.

En présence de la barre porteuse 11 et de l'élément de butée 21 ainsi réalisés, il peut s'ensuivre une étape d'assemblage de l'élément de butée 21 sur la barre porteuse 11, notamment par vissage.

Selon une variante de réalisation, l'élément de butée 21 peut être directement fabriqué au niveau de la barre porteuse selon une opération de surmoulage de la matière plastique.

L'agencement comprenant les éléments tels que précédemment décrits est remarquable en ce qu'il permet de manière simple et économique de réaliser un moyen visant à protéger l'intégrité d'un toit ouvrant lorsque le véhicule comprend des barres porteuses. Avec l'invention, la consigne d'ouverture du toit donnée par l'utilisation est prise en considération par l'unité électronique de commande afin de déplacer le toit ouvrant de sa position de fermeture vers une position d'ouverture. Toutefois, du fait de l'interaction de panneau mobile de toit ouvrant avec une cale déformable de la barre porteuse, le programme de l'unité électronique de commande est apte à inverser le sens de déplacement du panneau mobile de manière autonome, ce qui offre une sécurité optimale, tout du moins qui ne dégrade pas le panneau mobile de toit ouvrant.

Avantageusement, le moyen mécanique développé pour ce but de protection du panneau mobile de toit ouvrant de véhicule ayant un dispositif de portage, reste discret lorsque le dispositif de portage est dans sa configuration dite de rangement, où les barres porteuses s'étendent longitudinalement au véhicule.

## Revendications

1. Agencement (1) d'une caisse (2) de véhicule, notamment une automobile, comprenant un pavillon (3), un panneau mobile de toit ouvrant (4), un dispositif de portage (10) comportant des barres porteuses (11) et des interfaces de fixation (12), le dispositif de portage étant apte à prendre des configurations distinctes dites de rangement et de transport selon lesquelles la barres porteuses sont respectivement disposées en position longitudinale (L) et en position transversale (T), le pavillon comportant une ouverture destinée à être fermée par le panneau mobile de toit ouvrant (4), et qui comprend un dispositif de protection (20) du toit ouvrant comportant au moins un élément de butée (21) et une unité électronique de commande du déplacement du panneau mobile, le dispositif de protection étant destiné à inverser le sens de déplacement du panneau mobile de toit ouvrant lorsque le panneau mobile est amené en appui contre l'élément de butée (21),
**caractérisé en ce qu'**au moins une interface de fixation (12) comprend un logement (13), notamment une échancrure ouverte vers l'extérieur, notamment disposée au niveau d'une face sommitale du pied, qui est de forme sensiblement complémentaire à celle de l'élément de butée (21), aux jeux de tolérances de fabrication près, de telle sorte qu'en position longitudinale (L) de la barre porteuse (11), l'élément de butée est disposé à l'intérieur du logement de l'interface de fixation (12).

2. Agencement (1) selon la revendication précédente, **caractérisé en ce que** l'élément de butée (21) est assemblé audit dispositif de portage (10), notamment au niveau d'au moins une barre porteuse (11).

3. Agencement (1) selon la revendication 1 ou 2, **caractérisé en ce que** le dispositif de protection (20) est en relation électrique avec un moyen d'entrainement du toit ouvrant (4), notamment un moto-réducteur.

4. Agencement (1) selon l'une quelconque des revendications précédentes, **caractérisé en ce que** l'élément de butée (21) est une cale, notamment réalisée en polypropylène, s'étendant en saillie verticale hors d'une paroi inférieure de la barre porteuse (11) disposée au regard du pavillon (3) et/ou du toit ouvrant (4), notamment au toit ouvrant en position de fermeture ou d'entrebâillement.

5. Agencement (1) selon la revendication précédente, **caractérisé en ce qu'**il comprend un dispositif de guidage par lequel le toit ouvrant (4) est apte à prendre successivement une position de fermeture d'une ouverture de pavillon (3), une position d'ouverture partielle de l'ouverture de pavillon, notamment selon une position d'entrebâillement du toit ouvrant, et d'une position extrême d'ouverture selon laquelle le toit ouvrant est disposé au-dessus du pavillon, notamment de manière sensiblement parallèle au pavillon.

6. Agencement (1) selon l'une des revendications précédentes, **caractérisé en ce que** l'interface de fixation comportant le logement (13) est un pied arrière droit ou gauche.

7. Agencement (1) selon l'une quelconque des revendications précédentes, **caractérisé en ce qu'**en configuration dite de rangement, l'élément de butée (21) est rendu invisible.

8. Véhicule, notamment du type d'une automobile, **caractérisé en ce qu'**il comprend un agencement (1) selon l'une quelconque des revendications 1 à 7.

9. Procédé de réalisation de l'agencement selon l'une quelconque des revendications 1 à 7, comportant une étape de fabrication d'une barre porteuse, notamment par extrusion d'un métaux ferreux, tel qu'un alliage d'aluminium par exemple, suivie :
- soit d'une étape de fabrication d'un élément de butée (21), notamment par moulage d'une matière plastique, et d'une étape d'assemblage de l'élément de butée (21) sur la barre porteuse (11), notamment par vissage,
- soit d'une étape de fabrication d'un élément de butée (21) directement au niveau de la barre porteuse selon une opération de surmoulage d'une matière plastique, l'élément de butée (21) étant réalisé en matière plastique, notamment du polypropylène ayant une dureté comprise entre 50 et 70 Shore D, préférentiellement 63 Shore D.

## Patentansprüche

1. Anordnung (1) einer Karosserie (2) eines Fahrzeugs, insbesondere eines Automobils, welches ein Dach (3), eine bewegliche Sonnendachplatte (4) und eine Tragvorrichtung (10), die Tragstangen (11) und Befestigungsschnittstellen (12) aufweist, umfasst, wobei die Tragvorrichtung unterschiedliche Konfigurationen annehmen kann, Verstau- und Transportposition genannt, bei denen die Tragstangen in einer Längsposition (L) bzw. in einer Querposition (T) angeordnet sind, wobei das Dach eine Öffnung aufweist, die dazu bestimmt ist, von der beweglichen Sonnendachplatte (4) verschlossen zu werden, und welches eine Schutzvorrichtung (20) des Sonnendachs umfasst, die mindestens ein Anschlagelement (21) und eine elektronische Einheit zur Steuerung der Verschiebung der beweglichen Platte aufweist, wobei die Schutzvorrichtung dazu bestimmt ist, die Verschiebungsrichtung der beweglichen Sonnendachplatte umzukehren, wenn die bewegliche Platte am Anschlagelement (21) zur Anlage gebracht wird, **dadurch gekennzeichnet, dass** mindestens eine Befestigungsschnittstelle (12) eine Aufnahme (13) umfasst, insbesondere einen nach außen offenen Einschnitt, insbesondere an einer Scheitelfläche des Fußes, die von einer Form ist, die, von Fertigungstoleranzen abgesehen, im Wesentlichen komplementär zu derjenigen des Anschlagelements (21) ist, so dass in der Längsposition (L) der Tragstange (11) das Anschlagelement im Inneren der Aufnahme der Befestigungsschnittstelle (12) angeordnet ist.

2. Anordnung (1) nach dem vorhergehenden Anspruch, **dadurch gekennzeichnet, dass** das Anschlagelement (21) mit der Tragvorrichtung (10) zusammengebaut ist, insbesondere an mindestens einer Tragstange (11).

3. Anordnung (1) nach Anspruch 1 oder 2, **dadurch gekennzeichnet, dass** die Schutzvorrichtung (20) in elektrischer Verbindung mit einem Antriebsmittel des Sonnendachs (4) steht, insbesondere mit einem Getriebemotor.

4. Anordnung (1) nach einem der vorhergehenden Ansprüche, **dadurch gekennzeichnet, dass** das Anschlagelement (21) ein Keil ist, der insbesondere aus Polypropylen hergestellt ist und sich aus einer unteren Wand der Tragstange (11) vertikal vorstehend erstreckt, die gegenüber dem Dach (3) und/oder dem Sonnendach (4), insbesondere dem Sonnendach in der Schließposition oder spaltbreit geöffneten Position, angeordnet ist.

5. Anordnung (1) nach dem vorhergehenden Anspruch, **dadurch gekennzeichnet, dass** sie eine Führungsvorrichtung umfasst, durch die das Sonnendach (4) in der Lage ist, nacheinander eine Schließposition einer Öffnung des Dachs (3), eine Position der teilweisen Öffnung der Dachöffnung, insbesondere gemäß einer spaltbreit geöffneten Position des Sonnendachs, und eine extreme Öffnungsposition, bei der das Sonnendach oberhalb des Dachs angeordnet ist, insbesondere im Wesentlichen parallel zum Dach, einzunehmen.

6. Anordnung (1) nach einem der vorhergehenden Ansprüche, **dadurch gekennzeichnet, dass** die Befestigungsschnittstelle, welche die Aufnahme (13) umfasst, ein rechter oder linker hinterer Fuß ist.

7. Anordnung (1) nach einem der vorhergehenden Ansprüche, **dadurch gekennzeichnet, dass** in der sogenannten Verstauposition das Anschlagelement (21) unsichtbar wird.

8. Fahrzeug, insbesondere vom Typ eines Automobils, **dadurch gekennzeichnet, dass** es eine Anordnung (1) nach einem der Ansprüche 1 bis 7 umfasst.

9. Verfahren zur Herstellung der Anordnung nach einem der Ansprüche 1 bis 7, dass es einen Schritt der Herstellung einer Tragstange umfasst, insbesondere durch Extrudieren eines Eisenmetalls, wie zum Beispiel einer Aluminiumlegierung, gefolgt von:
- entweder einem Schritt der Herstellung eines Anschlagelements (21), insbesondere durch Formen eines Kunststoffs, und einem Schritt der Anbringung des Anschlagelements (21) an der Tragstange (11), insbesondere durch Verschraubung,
- oder einem Schritt der Herstellung eines Anschlagelements (21) direkt an der Tragstange durch einen Arbeitsgang der Überformung eines Kunststoffs, wobei das Anschlagelement (21) aus Kunststoff hergestellt wird, insbesondere aus Polypropylen mit einer Härte zwischen 50 und 70 Shore D, vorzugsweise von 63 Shore D.

## Claims

1. Arrangement (1) of a vehicle body (2), in particular an automobile body, comprising a roof (3), a movable sunroof panel (4), and a carrying device (10) comprising carrying bars (11) and fastening interfaces (12), the carrying device being able to adopt different configurations referred to as stowage and transport configurations in which the carrying bars are respectively arranged in a longitudinal position (L) and in a transverse position (T), the roof comprising an opening intended to be closed by the movable sunroof panel (4), and which comprises a protective device (20) for protecting the sunroof that comprises at least one stop element (21) and an electronic control unit for controlling the movement of the movable panel, the protective device being intended to reverse the direction of movement of the movable sunroof panel when the movable panel is brought into bearing contact with the stop element (21), **characterized in that** at least one fastening interface (12) comprises a receptacle (13), in particular an outwardly open notch, in particular arranged in a top face of the foot, which has a shape substantially complementary to that of the stop element (21), give or take the manufacturing tolerance clearances, such that, in the longitudinal position (L) of the carrying bar (11), the stop element is arranged within the receptacle of the fastening interface (12).

2. Arrangement (1) according to the preceding claim, **characterized in that** the stop element (21) is assembled on said carrying device (10), in particular on at least one carrying bar (11).

3. Arrangement (1) according to Claim 1 or 2, **characterized in that** the protective device (20) is electrically connected to a means for driving the sunroof (4), in particular a gear motor.

4. Arrangement (1) according to any one of the preceding claims, **characterized in that** the stop element (21) is a shim, in particular made of polypropylene, projecting vertically from a lower wall of the carrying bar (11) arranged facing the roof (3) and/or the sunroof (4), in particular with the sunroof in a closed or ajar position.

5. Arrangement (1) according to the preceding claim, **characterized in that** it comprises a guide device by means of which the sunroof (4) is able to successively adopt a position of closing an opening in the roof (3), a position of partially opening the roof opening, in particular in an ajar position of the sunroof, and an extreme opening position in which the sunroof is arranged above the roof, in particular substantially parallel to the roof.

6. Arrangement (1) according to one of the preceding claims, **characterized in that** the fastening interface comprising the receptacle (13) is a right or left rear foot.

7. Arrangement (1) according to any one of the preceding claims, **characterized in that**, in the configuration referred to as a stowage configuration, the stop element (21) is rendered invisible.

8. Vehicle, in particular an automobile-type vehicle, **characterized in that** it comprises an arrangement (1) according to any one of Claims 1 to 7.

9. Method for producing the arrangement according to any one of Claims 1 to 7, comprising a step of manufacturing a carrying bar, in particular by extruding a ferrous metal, such as an aluminium alloy, for example, followed:
- either by a step of manufacturing a stop element (21), in particular by moulding a plastics material, and by a step of assembling the stop element (21) on the carrying bar (11), in particular by screwing,
- or by a step of manufacturing a stop element (21) directly on the carrying bar by an operation of overmoulding a plastics material, the stop element (21) being made of plastics material, in particular polypropylene having a hardness of between 50 and 70 Shore D, preferably 63 Shore D.
